(19) Europäisches Patentamt
European Patent Office
Office européen des brevets

(11) Numéro de publication : **0 130 867**
**B1**

(12) **FASCICULE DE BREVET EUROPÉEN**

(45) Date de publication du fascicule du brevet :
25.03.87

(51) Int. Cl.⁴ : **F 16 J 15/08, F 16 L 23/00**

(21) Numéro de dépôt : 84401139.5

(22) Date de dépôt : 05.06.84

(54) **Joint métallique flexible.**

(30) Priorité : 07.06.83 FR 8309431

(43) Date de publication de la demande :
09.01.85 Bulletin 85/02

(45) Mention de la délivrance du brevet :
25.03.87 Bulletin 87/13

(84) Etats contractants désignés :
BE CH DE FR GB IT LI SE

(56) Documents cités :
FR-A- 2 151 186
FR-A- 2 232 235

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Court, André**
**2, Avenue Branly**
**F-26700 Pierrelatte (FR)**
Inventeur : **de Villepoix, Raymond**
**"La Chatelière"**
**F-26290 Donzère (FR)**
Inventeur : **Forges, Robert**
**Les Charagons**
**F-84500 Bollène (FR)**
Inventeur : **Abbes, Claude**
**5 Chemin du Crêt du Loup**
**F-42000 Saint Etienne (FR)**
Inventeur : **Bacchis, Fernand**
**72, rue du Cygne Sauvage**
**F-42290 Sorbiers (FR)**
Inventeur : **Rouaud, Christian**
**Les Genêts**
**F-07700 Bourg Saint Andéol (FR)**

(74) Mandataire : **Mongrédien, André et al**
**c/o BREVATOME 25, rue de Ponthieu**
**F-75008 Paris (FR)**

EP 0 130 867 B1

Jouve, 18, rue St-Denis, 75001 Paris, France

## Description

La présente invention se rapporte à un joint métallique flexible du type comprenant au moins une âme métallique élastique présentant, lorsqu'elle est au repos, la forme d'un tore, et au moins deux enveloppes dans lesquelles est encastrée l'âme métallique, chaque enveloppe étant ouverte suivant l'une des périphéries de l'âme métallique.

Dans les joints métalliques de ce type, l'âme élastique torique est constituée soit par un tube métallique, soit par un ressort hélicoïdal à spires jointives refermé sur lui-même. Dans ce dernier cas, la section du fil constituant le ressort peut être quelconque et notamment ronde, rectangulaire ou en segment de cercle. Le tube ou le ressort hélicoïdal, serré sur champ, confère au joint son élasticité.

D'autre part, les enveloppes entourant l'âme des joints existants de ce type sont constituées de matériaux plaqués ou en feuilles minces tels que le polytétrafluoréthylène, l'aluminium, l'argent, le cuivre, le nickel, le tantale, l'acier inoxydable, le zirconium, etc.

Chacune des enveloppes a un rôle particulier. Ainsi, lorsque l'âme du joint est constituée par un ressort à spires jointives, l'enveloppe interne a en général un rôle de répartition de charge au niveau de chaque sommet de spire de l'âme élastique. L'enveloppe externe est réalisée quant à elle en un métal ductile permettant, grâce à ces capacités de fluage dans les aspérités des surfaces en contact, de conférer au joint une parfaite étanchéité lorsqu'il est serré dans un assemblage. D'une manière générale, ce sont donc les propriétés plastiques des matériaux qui les constituent qui caractérisent les enveloppes du joint.

On remarquera en outre que les joints métalliques existants sont très généralement de forme torique, les enveloppes qui enserrent l'âme élastique ayant également la forme d'une surface torique dont le cercle générateur ne se referme pas sur lui-même. Une illustration de joints dont l'âme élastique est constituée par un ressort hélicoïdal à spires jointives est donnée par le brevet français n° 2 232 235 au nom du Commissariat à l'Energie Atomique.

L'expérience industrielle montre que ces joints métalliques élastiques donnent satisfaction pour de nombreuses utilisations. Toutefois, dans le cas où les assemblages présentent des mouvements ou des déplacements radiaux différentiels entre les brides, l'étanchéité obtenue initialement peut perdre de son efficacité.

Ces mouvements différentiels se rencontrent chaque fois que les brides de l'assemblage sont en matériaux hétérogènes ou anisotropes ou encore en matériaux homogènes, lorsque les conditions de montée ou de descente en température ne sont pas homogènes pour tout l'assemblage. Dans la pratique, ces conditions se rencontrent très fréquemment.

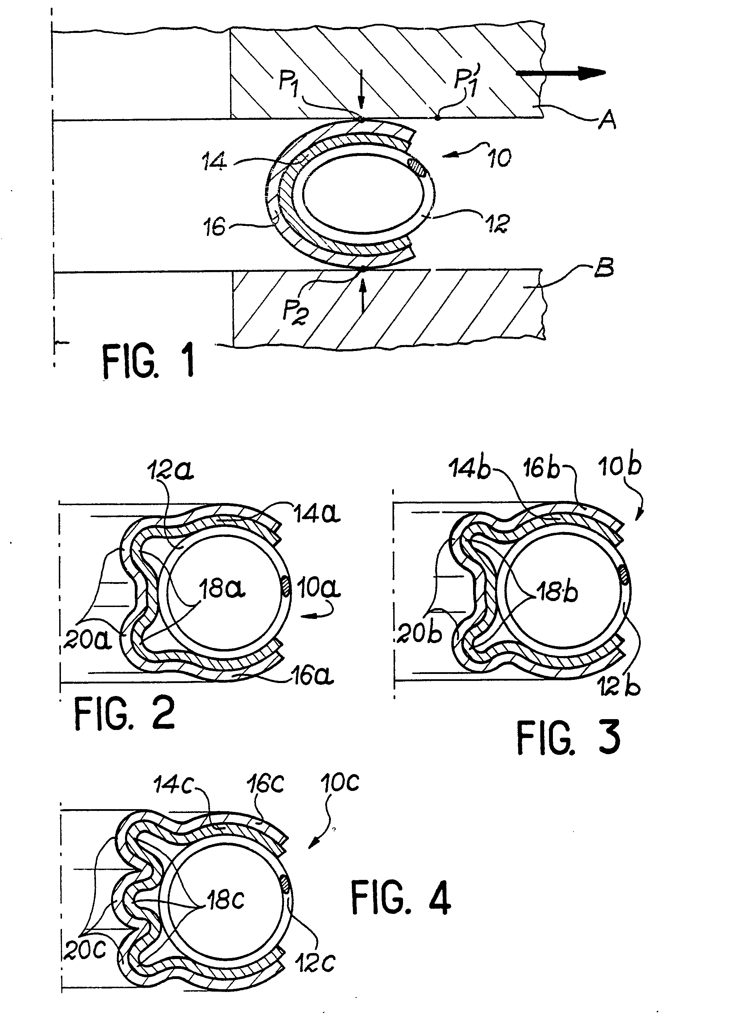

Afin d'analyser le comportement des joints métalliques flexibles existants dans les conditions évoquées ci-dessus, il est fait référence à la figure 1 qui représente, en coupe transversale, un joint métallique flexible existant 10 serré entre deux brides A et B.

De façon plus précise, on a représenté à titre d'exemple sur la figure 1 un joint 10 dont l'âme est constituée par un ressort hélicoïdal métallique 12 à spires jointives, ce ressort étant encastré dans une première enveloppe 14, elle-même encastrée dans une seconde enveloppe 16. On a désigné par $P_1$ et $P_2$ les points de contact de l'enveloppe externe 16 du joint respectivement avec les brides A et B, après que le serrage de l'assemblage ait été réalisé.

Si l'on suppose que la bride A se dilate plus que la bride B après serrage de l'assemblage, le point $P_1$ de la bride A vient en $P'_1$. Au cours de ce déplacement, l'enveloppe extérieure 16 du joint est sollicitée en subissant un étirage, puis un glissement, car la partie de l'enveloppe 16 délimitée en longueur par les points $P_1$ et $P_2$ est coincée contre l'âme élastique 12 et ne peut s'allonger sans dommage pour le joint. Il en résulte par conséquent une perte d'étanchéité du joint qui peut être d'autant plus grande que le phénomène peut se répéter dans l'un et l'autre sens et avec une amplitude variable durant la vie de l'assemblage.

La présente invention a précisément pour objet de supprimer cet inconvénient des joints métalliques flexibles existants, en permettant à l'ensemble des couches constituant les enveloppes du joint de suivre les déplacements radiaux différentiels entre les brides A et B en glissant sur l'âme élastique du joint sans déplacement différentiel au niveau des contacts entre l'enveloppe extérieure 16 du joint et les brides A et B.

Conformément à l'invention, ce résultat est obtenu au moyen d'un joint métallique flexible tel que défini précédemment et caractérisé en ce que chaque enveloppe comporte, suivant la périphérie de l'âme métallique opposée à l'ouverture de cette enveloppe, au moins deux renflements au niveau desquels cette enveloppe n'est pas en contact avec l'âme métallique, chaque renflement ayant en section un rayon de courbure sensiblement 5 à 10 fois inférieur au rayon de l'âme métallique, deux des renflements étant placés à proximité des surfaces de contact opposées du joint, ce dernier s'inscrivant en section sensiblement dans un carré.

Grâce à cette caractéristique, la longueur présentée en section par les enveloppes 14 et 16 entre les points $P_1$ et $P_2$ tels que définis sur la figure 1 est supérieure à la valeur qu'elle aurait dans le cas des joints existants, ce qui permet à ces enveloppes de suivre les déplacements relatifs des brides sans glisser par rapport à celles-ci. On évite ainsi l'étirage du métal et toute perte d'étanchéité du joint.

Selon un mode de réalisation préféré de l'invention, les enveloppes sont ouvertes suivant la même périphérie de l'âme métallique et comportent chacune au moins deux renflements suivant l'autre périphérie de l'âme métallique.

Selon un autre aspect de l'invention, les renflements sont disposés de préférence suivant la périphérie interne du joint.

On décrira maintenant, à titre d'exemple non limitatif, différents modes de réalisation de l'invention en se référant aux dessins annexés dans lesquels :

La figure 1, déjà décrite, représente en coupe transversale un joint métallique flexible connu serré entre deux brides,

les figures 2 et 3 représentent, en coupe transversale, deux variantes de réalisation de l'invention dans le cas d'un joint à une seule ligne d'étanchéité comprenant deux enveloppes superposées présentant deux renflements de différentes formes,

la figure 4 représente, en coupe transversale, un joint métallique flexible selon l'invention à une seule ligne d'étanchéité comprenant deux enveloppes présentant trois renflements.

On reconnaît sur la figure 2 les différents éléments constitutifs des joints connus tels que celui qui a été décrit précédemment en se référant à la figure 1.

En particulier, le joint 10a représenté sur la figure 2 se compose d'une âme métallique constituée par un ressort hélicoïdal à spires jointives 12a encastré dans une première enveloppe ou enveloppe interne 14a, elle-même encastrée dans une deuxième enveloppe ou enveloppe externe 16a.

Conformément à l'invention, chacune des enveloppes 14a et 16a présente, suivant la périphérie interne du joint, deux renflements en forme de lyre désignés respectivement par les références 18a et 20a pour les enveloppes interne et externe. Au niveau de ces renflements, les enveloppes ne sont pas en contact avec l'âme élastique 12a, même lorsque le joint est écrasé dans l'assemblage.

De façon plus précise, dans le mode de réalisation de la figure 2, les enveloppes 14a et 16a sont disposées dans le même sens autour du ressort hélicoïdal 12a, de telle sorte que le cercle générateur de chacune des enveloppes ne se referme pas sur lui-même au niveau de la périphérie externe du joint et que les renflements 18a et 20a sont situés l'un dans l'autre et à l'opposé par rapport au côté ouvert des enveloppes, c'est-à-dire suivant la périphérie interne du joint.

Conformément à l'invention, les deux renflements 18a et 20a de chaque enveloppe sont disposés de façon symétrique de part et d'autre du plan médian du joint. De façon plus précise, ils sont placés à proximité immédiate des zones de contact du joint avec les brides de l'assemblage, de telle sorte que la section du joint s'inscrit sensiblement dans un carré.

L'effort nécessaire pour que la bride entraîne les deux enveloppes dans un déplacement radial éventuel est ainsi minimisé.

De plus, le rayon de courbure présenté en section par les renflements 18a et 20a est très inférieur au rayon du ressort 12a et, de préférence, sensiblement 5 à 10 fois inférieur à ce dernier. On évite ainsi un raidissement trop important du joint.

Enfin, il faut noter que la présence d'au moins deux enveloppes 14 et 16 est nécessaire à l'invention. En effet, une enveloppe unique doit être ductile pour réaliser l'étanchéité. Le serrage du joint a donc pour effet d'incruster le ressort dans cette enveloppe, ce qui empêche pratiquement tout glissement de l'enveloppe sur le ressort sans destruction de l'enveloppe.

Le joint 10b de la figure 3 est semblable au joint 10a de la figure 2, à l'exception des renflements qui sont de forme différente, les renflements des enveloppes étant plus allongés sur la figure 3 que sur la figure 2. Par ailleurs, tous les éléments du joint 10b sont désignés sur la figure 3 par le même numéro de référence que sur la figure 2, affecté de l'indice b à la place de l'indice a. Ces éléments ne seront donc pas décrits à nouveau.

Sur la figure 4, on a représenté un autre mode de réalisation du joint selon l'invention, ce joint 10c étant à une seule ligne d'étanchéité et étant par ailleurs réalisé de la même manière que les joints des figures 2 et 3, sinon que les enveloppes interne 14c et externe 16c comportent chacune trois renflements 18c et 20c au lieu de deux. Ces renflements 18c et 20c sont disposés le long de la périphérie interne du joint.

Dans ce cas, deux des renflements 18c et 20c de chaque enveloppe sont disposés symétriquement de part et d'autre du plan médian du joint, comme dans les modes de réalisation des figures 2 et 3, alors que le troisième renflement 18c et 20c est disposé entre les deux autres, selon le plan médian du joint et de façon symétrique par rapport à ce plan.

Dans les variantes représentées sur les figures 3 et 4, comme dans le cas de la figure 2, le rayon de courbure présenté en section par chaque renflement est inférieur environ 5 à 10 fois au rayon présenté en section par l'âme du joint. De plus, deux des renflements sont placés à proximité immédiate des faces d'appui du joint. Ainsi, ce dernier s'inscrit en section sensiblement dans un carré.

Dans tous les modes de réalisation qui viennent d'être décrits on voit que les renflements ne peuvent être réalisés par construction qu'à l'opposé de la zone où le cercle générateur des enveloppes ne se referme pas sur lui-même. D'autre part, la forme et l'emplacement des renflements ne doivent pas entraver le serrage du joint dans l'assemblage. En d'autres termes, cette dernière condition implique que l'épaisseur du joint au niveau des renflements soit au plus égale à l'épaisseur du joint au niveau de l'âme métallique élastique.

Conformément à l'invention, et quelle que soit la forme de réalisation du joint, on voit que le résultat recherché est bien atteint puisque la présence d'au moins deux renflements sur les enveloppes au niveau de la ou de chacune des âmes métalliques du joint permet aux enveloppes de suivre un éventuel déplacement relatif entre les brides de l'assemblage sans glisser par rapport à celles-ci et donc sans perte d'étanchéité.

Ainsi, des essais comparatifs effectués sur un joint de la technique antérieure et sur un joint de même dimension réalisé conformément à l'invention ont permis d'atteindre avec ce dernier une température limite de 140 °C au lieu de 110 °C pour le joint conventionnel, le déplacement radial admissible entre les brides étant par ailleurs repoussé de 0,43 mm à 0,57 mm.

Il est clair que le nombre et la forme des renflements peuvent être modifiés dans les limites définies précédemment sans affecter l'obtention de ce résultat. De même, il importe peu que le joint métallique flexible comporte deux enveloppes ou plus entourant l'âme métallique élastique, celle-ci pouvant être par ailleurs réalisée d'une manière différente du ressort hélicoïdal décrit, et notamment sous la forme d'un tube métallique. Dans le même esprit, on comprendra que le joint selon l'invention peut présenter en vue de dessus une forme quelconque, c'est-à-dire qu'il peut être aussi bien circulaire que de forme sensiblement carrée ou rectangulaire, sans sortir du cadre de l'invention.

## Revendications

1. Joint métallique flexible comprenant au moins une âme métallique élastique (12a à 12c) présentant, lorsqu'elle est au repos, la forme d'un tore, et au moins deux enveloppes superposées (14a à 14c ; 16a à 16c) dans lesquelles est encastrée l'âme métallique, chaque enveloppe étant ouverte suivant l'une des périphéries de l'âme métallique, caractérisé en ce que chaque enveloppe comporte, suivant l'autre périphérie de l'âme métallique, au moins deux renflements (18a à 18c ; 20a à 20c) au niveau desquels cette enveloppe n'est pas en contact avec l'âme métallique, chaque renflement ayant en section un rayon de courbure sensiblement 5 à 10 fois inférieur au rayon de l'âme métallique, deux des renflements étant placés à proximité des surfaces de contact opposées du joint, ce dernier s'inscrivant en section sensiblement dans un carré.

2. Joint selon la revendication 1, caractérisé en ce que les enveloppes sont ouvertes suivant la même périphérie de l'âme métallique et comportent chacune au moins deux renflements (18a, 18b et 18c) suivant l'autre périphérie de l'âme métallique.

3. Joint selon l'une quelconque des revendications précédentes, caractérisé en ce que lesdits renflements (18a à 18c, 20a à 20c) sont disposés suivant la périphérie interne du joint.

## Claims

1. Flexible metal gasket comprising at least one elastic metal core (12a to 12c), having the form of a torus when at rest, and at least two superimposed casings (14a to 14c ; 16a to 16c) in which the metal core is embedded, each casing being open over one of the peripheries of the metal core, characterized in that each casing has, along the other periphery of the metal core, at least two bulges (18a to 18c ; 20a to 20c), in the region of which this casing is not in contact with the metal core, each bulge having, in cross-section, a radius of curvature essentially 5 to 10 times less than the radius of the metal core, two of the bulges being located near the opposite contact surfaces of the gasket, the latter, in cross-section, being substantially inscribed within a square.

2. Gasket according to Claim 1, characterized in that the casings are open along the same periphery of the metal core and each has at least two bulges (18a, 18b and 18c) along the other periphery of the metal core.

3. Gasket according to either one of the preceding claims, characterized in that the said bulges (18a to 18c ; 20a to 20c) are arranged along the inner periphery of the gasket.

## Patentansprüche

1. Nachgiebige Metalldichtung, enthaltend wenigstens einen elastischen Metallkern (12a bis 12c), der in Ruhestellung die Form eines Torus hat, und wenigstens zwei übereinanderliegende Hüllen (14a bis 14c ; 16a bis 16c), in denen der Metallkern eingebaut ist, wobei jede Hülle längs eines der Umfänge des Metallkerns offen ist, dadurch gekennzeichnet, daß jede Hülle längs dem anderen Umfang des Metallkerns wenigstens zwei Ausbauchungen (18a bis 18c ; 20a bis 20c) aufweist, in deren Höhe diese Hülle nicht mit dem Metallkern in Berührung steht, wobei jede Ausbauchung im Querschnitt einen Krümmungsradius hat, der deutlich fünf- bis zehnmal kleiner als der Radius des Metallkerns ist, wobei zwei der Ausbauchungen nahe den Berührungsflächen gegenüber der Dichtung angeordnet sind, wobei letztere im Querschnitt deutlich in einem Quadrat einbeschrieben ist.

2. Dichtung nach Anspruch 1, dadurch gekennzeichnet, daß die Hüllen längs des gleichen Umfangs des Metallkerns offen sind und jeweils wenigstens zwei Ausbauchungen (18a, 18b und 18c) längs dem anderen Umfang des Metallkerns aufweisen.

3. Dichtung nach einem der vorhergehenden Ansprüche, dadurch gekennzeichnet, daß die Ausbauchungen (18a bis 18c, 20a bis 20c) längs des innenliegenden Umfangs der Dichtung angeordnet sind.

0 130 867

FIG. 1

P₁    P₁'    A

14

16    10    12

P₂    B

FIG. 2

12a    14a
18a    10a
20a
16a

FIG. 3

14b    16b    10b
18b
20b
12b

FIG. 4

14c    16c    10c
18c
20c    12c

1